# EUROPEAN PATENT SPECIFICATION

(11) **EP 2 658 773 B1**
(45) Date of publication and mention of the grant of the patent: **05.10.2016**
(21) Application number: 12701456.1
(22) Date of filing: 02.01.2012
(51) Int. Cl.: B63H 5/08, B63H 21/17

(54) **PROPULSION SYSTEM**
ANTRIEBSSYSTEM
SYSTÈME DE PROPULSION

(30) Priority: 31.12.2010 EP 10197480
(43) Date of publication of application: 06.11.2013
(73) Proprietor: ABB Oy, 00380 Helsinki (FI)
(72) Inventor: KOKKILA, Kimmo, FI-00980 Helsinki (FI); KAJAVA, Mikko, FI-00980 Helsinki (FI); KANERVA, Sami, FI-00980 Helsinki (FI)
(74) Representative: Korpelainen, Seppo Ilmari
(86) International application number: PCT/EP2012/050022
(87) International publication number: WO 2012/089846

(56) References cited:
- EP-A1- 1 561 683
- EP-A2- 2 236 409
- WO-A1-2004/089740
- WO-A1-2005/030573
- CH-A- 87 327
- DE-A1- 3 207 398
- JP-A- 6 056 082

## Description

### Field of the invention

The present invention relates to an arrangement for supplying propulsion power to a contra rotating propellers (CRP) propulsion system in a marine vessel, which arrangement comprises a first propeller driven by a rotating power unit and a second propeller driven by an AC motor.

### Background of the invention

The propulsion power of the large ships or marine vessels is generated by rotating power unit, whose energy source is oil, gas, nuclear power. The rotating power unit may be a diesel engine, gas turbine or nuclear power reactor rotating turbine. The mechanical output shaft is either directly or via a gear coupled to the shaft of the propeller or the rotating power unit drives a generator, which supplies electric power to the propeller motors of the ship. Furthermore, several different combinations of these two main manners to drive the propeller has been utilized.

The power and energy efficiency of the marine vessel necessitate that the propulsion power is generated as economically as possible in different operation modes. The overall energy consumption should therefore be optimized. That means that the electric energy must be generated using the most economical power production system that is available on board and that the electric energy is utilized as efficiently as possible when supplying the electric energy to the devices and motors using the electric energy.

As is well-known in the art the propulsion devices consume the majority of the energy expended in the marine vessels. Further, the propulsive force or thrust is generated using simultaneously different kind of engines or motors. Therefore it is important that these cooperate so that when producing the required propulsive power and steering their combined energy consumption is as low as possible. At the same time the total energy consumption and the generation of electricity must be as efficient as possible. It is essential that the total energy of the vessel is generated effectively and the electric power is supplied and used to all the electric power consuming devices effectively in different operating situations.

Publication WO 02/072418 suggests a CRP-propeller arrangement where one propeller is driven by a main engine and another propeller is driven by an electric motor. The shafts of the first and second propellers are coaxial and the shaft of the first propeller is arranged in the hollow shaft of the second propeller. The main engine drives the first propeller coupled to the shaft of the main engine and the generator arranged to the shaft of the main engine supplies electric power to a motor that drives the second propeller. In addition, there are other engines that rotate generators that supply power to the motor.

Publication DE 3207398 discloses a CRP arrangement wherein the main engine rotates on propeller that is pillowed on the hull of the ship and the other propeller is arranged to the rudder unit. The other propeller is rotated by a motor that is supplied from the generator driven by the main engine. The motor is connected directly to the generator or via a frequency converter. Alternatively the motor is supplied via a main switch board from another generator driven another main engine.

### Summary of the invention

The object of the invention is to create a new and cost-effective arrangement to supply electric power in a ship or marine vessel. This arrangement according to the invention is characterized by the features of claim 1. Preferred embodiments of the invention are defined in the dependent claims.

Arrangement for supplying propulsion power to a contra rotating propellers (CRP) propulsion system in a marine vessel comprises a first propeller driven by a rotating power unit and a second propeller driven by an AC motor, whereby the second propeller is rotated in the opposite direction as the first propeller, wherein an AC generator is driven by the rotating power unit and the AC generator is electrically connected to the AC motor. The rotation speed of the second propeller is between 95% and 150% of the rotation speed of the first propeller, that the AC motor and the AC generator have the same electrical frequency, and that the pole number of the AC generator is from 2 to 40 and the pole number of the AC motor is from 2 to 40 so that the ratio of the pole numbers of the AC motor and the AC generator is from 0.05 to 20. The value of the pole number is an even number.

According to one preferable embodiment of the invention the diameter of the second propeller is smaller than the diameter of first propeller.

According to one preferable embodiment of the invention the distance between the first propeller and the second propeller is less than twice the diameter of the first propeller.

According to one preferable embodiment of the invention the power proportion of the first propeller and the second propeller ranges between 50:50 and 80:20.

According to one preferable embodiment of the invention the AC motor is supplied by a second electrical power source, which is electrically connected parallel to the AC generator.

According to one preferable embodiment of the invention the AC generator supplies electric power to a second electrical consumer, which is electrically connected to the ac generator.

According to one preferable embodiment of the invention the second power source comprises a frequency converter, and that the second power source is electrically connected via a switch to the AC motor.

According to one preferable embodiment of the invention the second power source is switchable to the AC motor and/or the AC generator when changing the power distribution between the first propeller and the second propeller.

According to one preferable embodiment of the invention an electrical power connection between the AC motor and the AC generator comprises a line breaker, and that the AC generator and the second power source are alternatively switchable to the AC motor when maneuvering the vessel.

When using the arrangement of the invention there is more freedom in ship's general arrangement and hull design compared e.g. to the mechanical propulsion. The electric power generators can be positioned in a more advantageous way and the hydrodynamic efficiency of the vessel is thereby improved.

The energy is generated by the most efficient way in different operation situations and when fulfilling varying power demand of the vessel. Thereby the electrical losses of the marine vessel also are minimized compared to conventional electrical propulsion systems.

The arrangement of the invention enables to configure the power generating plants and the engines using primary energy source in a sensible way in accordance with the requirements of the vessel. This gives freedom to choose the most suitable of the plurality of multiple power plant configurations and thus enables energy-efficient ship operation.

The energy generating machines like diesel engines and the propulsive power generating motors like electric motors or main propeller driving diesel are distributed the vessel and they can be connected and disconnected. Thereby the redundancy of the propulsive units or their subunits like can be increased.

### Brief description of the drawings

The invention will be described in more detail in the following by referring to the appended figures, in which
- Figure 1 shows a first preferred embodiment of the invention,
- Figure 2 shows a second preferred embodiment of the invention
- Figure 3 shows an operation mode of the second preferred embodiment of the invention,
- Figure 4 shows a second operation mode of the second preferred embodiment of the invention,
- Figure 5 shows a third operation mode of the second preferred embodiment of the invention,
- Figure 6 shows a fourth operation mode of the second preferred embodiment of the invention,
- Figure 7 shows a fifth operation mode of the second embodiment of the invention,
- Figure 8 shows a second preferred embodiment of the invention and
- Figure 9 shows a third preferred embodiment of the invention.

### Detailed description of the invention

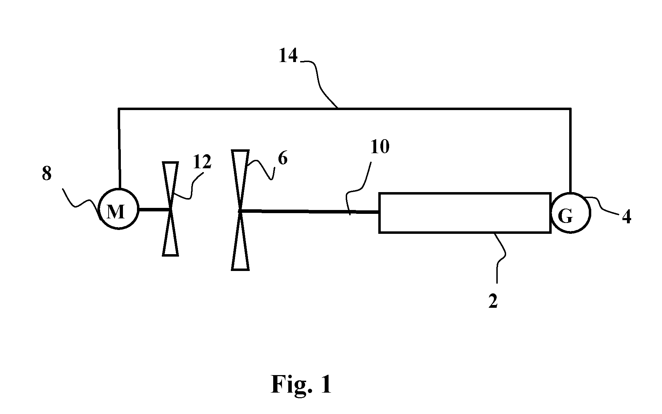

Figure 1 shows a schematic diagram of a second embodiment of the invention. A main rotating power unit 2 that is e.g. a two-stroke diesel engine drives a propulsion ac generator 4, whose rotor is fastened to the one output shaft of the rotating power unit 2. A main propeller 6 of the vessel is fastened onto another output shaft 10 of the rotating power unit 2. Though the ac generator 4 and the propeller 6 are on the opposite sides of the rotating power unit 2 in the embodiment shown in the figure 1, the generator may as well be on the same side of the rotating power unit 2 as the propeller 6. Opposite to the main propeller 6 is arranged a second propeller 12 which is driven by an ac motor 8. The main or the forward propeller 6 is fitted with a bearing to the hull of the vessel. The second or the aft propeller 12 is supported with the ac motor 8 to the hull of the vessel or to the rudder arrangement of the vessel. The forward propeller 6 and the aft propeller 12 are arranged to operate in a contra rotating propeller (CRP) mode that is well-known to the men skilled in the art. The ac generator 4 is connected to the ac motor 8 by an electrical power connection 14. The ac motor 8 and the ac generator 4 have the same frequency. Their rotational speed as well as the rotational speed of the aft and the forward propellers is affected by the frequency.

The power P_{ME} of the rotating power unit 2 is some dozens of MW like 60 to 100 MW or more depending on the propulsion power demand of the marine vessel. The power P_{G} of the ac generator 4 and the power P_{M} of ac motor 8 are on the range of 20 to 50 % of P_{ME}. Thus the power proportion of the forward and aft propellers varies from 50:50 to 20:80. The pole number of the ac generator 4 and the pole number of the ac motor 8 have values that are chosen to give an optimal propulsion effect in the CRP-arrangement. The rotation speed of the second propeller is between 95% and 150% of the rotation speed of the first propeller. The pole number of the ac generator 4 may have value between 2 to 40 and the pole number of the ac motor 8 may have value between 2 to 40, whereby the value of the pole number is an even number. The ratio of the pole numbers of the AC motor and the AC generator is from 0.05 to 20.

The values are defined case by case when dimensioning the whole CRP drive and several factors effect to it. There may be gears between the rotating power unit and ac generator, gears between the forward propeller and rotating power unit and gears between the aft propeller and the ac motor. The diameter proportions of the propellers and distance between the propellers also affect what is the required proportion of the rotational speed of the aft and forward propellers. By selecting the pole number of the ac generator and the pole number of the ac motor the required proportion of the rotational speed of the aft and forward propellers is achieved as the mutual speed of the ac motors and the ac generator is defined by their pole numbers.

As an example: the rotational speed of the rotating power unit is 100 rpm and the ac generator and the forward propeller is directly connected to the shaft of the rotating power unit. It is required that rotational speed of the aft propeller that is directly connected to the shaft of the ac motor should be 120 rpm. Then by selecting the pole number equal to 12 for the ac generator and the pole number equal to 10 to the ac motor the required proportion for the rotational speeds of the propellers will be achieved as the ac generator and the ac motor are directly connected by the electrical power connection and they have the same frequency.

As another example: the rotational speed of is 100 rpm of the rotating power unit and the forward propeller is directly connected to the shaft of the rotating power unit. The ac generator is connected via a gearbox to the shaft of the rotating power unit. Transmission ratio of the gear is equal to 3 and the rotational speed of the ac generator is equal 300 rpm. It is required that rotational speed of the aft propeller that is directly connected to the shaft of the ac motor should be 120 rpm. Then by selecting the pole number equal to 4 for the ac generator and the pole number equal to 10 to the ac motor the required proportion for the rotational speeds of the propellers will be achieved as the ac generator and the ac motor are directly connected by the electrical power connection and they have the same frequency.

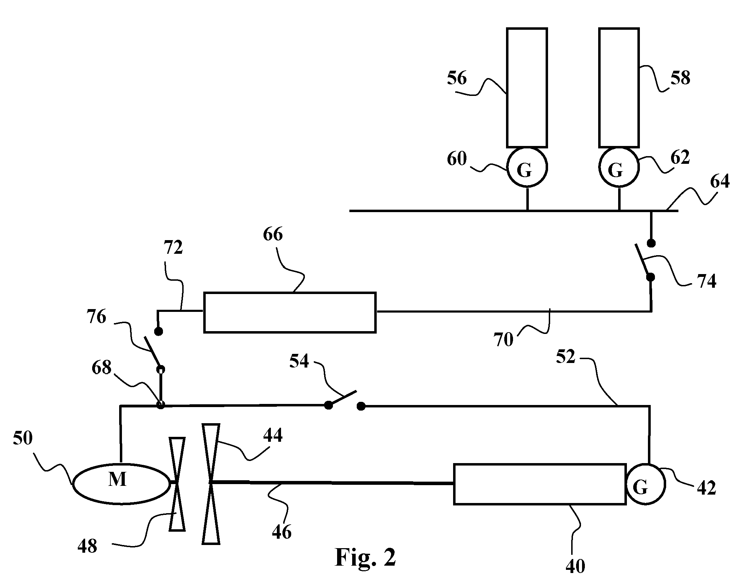

Figure 2 shows a schematic diagram of a second embodiment of the invention. A main rotating power unit 40 that is e.g. a two-stroke diesel engine drives a propulsion ac generator 42, whose rotor is fastened to the one output shaft of the rotating power unit 40. A main propeller 44 of the vessel is fastened onto another output shaft 46 of the rotating power unit 40. Though the generator 42 and the propeller 44 are on the opposite sides of the rotating power unit 40 in the embodiment shown in the figure 2, the generator may as well be on the same side of the rotating power unit 40 as the propeller 44. Opposite to the main propeller 44 is arranged a second propeller 48 which is driven by an ac motor 50. The main or the forward propeller 44 is fitted with a bearing to the hull of the vessel. The second or the aft propeller 48 is supported with the ac motor 50 to the hull of the vessel or to the rudder arrangement of the vessel. The forward propeller 44 and the aft propeller 48 are arranged to operate in a contra rotating propulsion (CRP) mode that is well-known to the men skilled in the art. The propulsion ac generator 42 is connected to the ac motor 50 by an electrical power connection 52. A circuit breaker 54 is arranged on the electrical power connection 52 by which the connection between the ac motor 50 and the propulsion ac generator 42 can be switched on and switched off. When the circuit breaker 54 is switched on, the ac motor 50 and the propulsion ac generator 42 have the same frequency. Their rotational speed as well as the rotational speed of the aft and the forward propellers is effected by the frequency.

Two auxiliary rotating power units 56 and 58 are coupled to two generators 60 and 62, which are via electrical power connections connected to a main switchboard or a main bus 64 of the ship. The switchboard 64 is connected to the electric distribution mains of the vessel and the generators 60 and 62 supply the electric power to the consumers. The auxiliary rotating power units 56 and 58 are preferably four-stroke diesel engines having lower power than the rotating power unit 40. The auxiliary rotating power units 56 and 58 can be located in a suitable space in the hull of the vessel and they need not be positioned near the propellers 44 or 48 of the vessel or near the other consumers of the electric power. A frequency converter 66 is coupled between the main switchboard 64 and the junction 68 of the electrical power connection 52 via an electrical power connection 70 and via an electrical power connection 72 connecting, respectively. There is a second circuit breaker 74 between the main switchboard 64 and the frequency converter 66 and a third circuit breaker 76 between the frequency converter 66 and the junction 68.

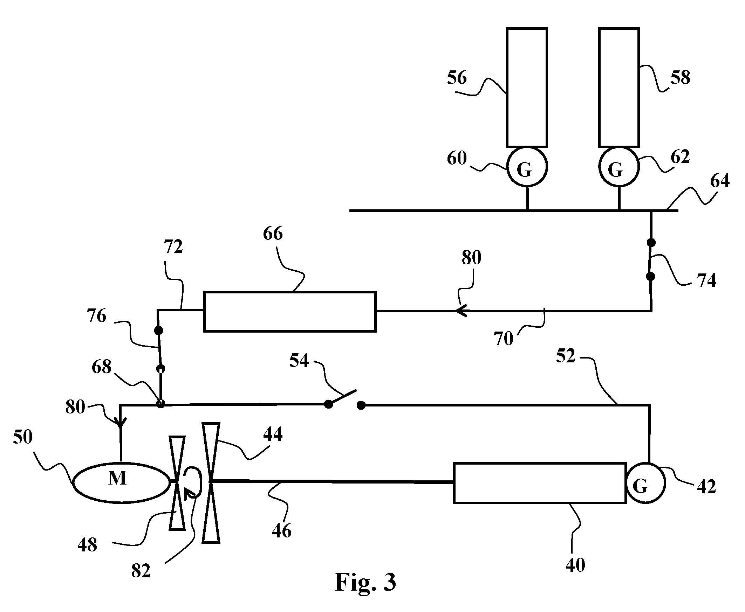

The propulsion system shown in the figure 2 can be operated and controlled in several ways depending on the operation mode. Referring to the figures 3 to 6 several operation modes will be clarified. When applicable the same reference numbers will be used the in the figures 3 to 7 as in the figure 2.

Figure 3 shows the second embodiment of the invention in a maneuvering mode where the propulsion power is generated by the auxiliary rotating power units 56 and 58 whereas the main rotating power unit is not working. The propulsion power is generated by the aft propeller 48 as illustrated by the arrow 82 and forward propeller is at a standstill. Thus the ac generator 42 neither is generating electric power and the circuit breaker 54 is switched off. The circuit breakers 74 and 76 are switched on and the electric power is supplied to ac motor 50 via the frequency converter 66 and via the main switchboard from the generators 60 and 62. The flow of electric power is illustrated by the arrows 80. The power and frequency supplying the electric energy to the ac motor 50 is controlled by the frequency converter 66. The propulsion power of the aft propeller is limited to the capacity of the ac generators 60 and 62, and in practice to the capacity of the frequency converter 66.

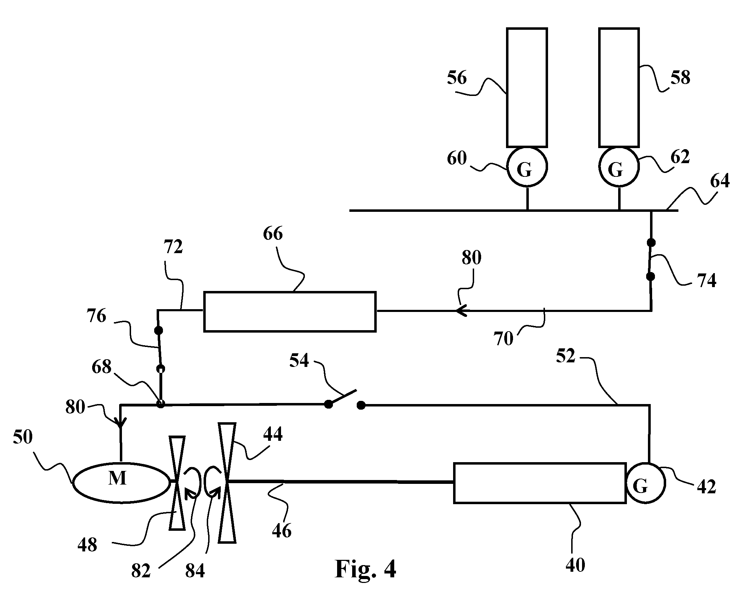

Figure 4 shows the second embodiment of the invention in a first start-up mode where the propulsion power is generated by the auxiliary rotating power units 56 and 58 and the main rotating power unit 40. The aft propeller 48 and the forward propeller 44 function in the CRP-mode as is illustrated by the arrows 82 and 84. Though the main rotating power unit is functioning, the ac generator 42 is not generating electric power and the power circuit breaker 54 is switched off. The circuit breakers 74 and 76 are switched on and the electric power is supplied to ac motor 50 via the frequency converter 66 and via the main switchboard from the generators 60 and 62. The flow of electric power is illustrated by the arrows 80. The power and frequency supplying the electric energy to the ac motor 50 is controlled by the frequency converter 66. In this mode the speed of the aft propeller 48 can be controlled independent of the speed of the forward propeller 44. The main rotating power unit is working on a lowered power level, like 25 % of its nominal power and propulsion power of the forward propeller is about 25 % of its total power. The propulsion power of the aft propeller is limited to the capacity of the ac generators 60 and 62, and in practice to the capacity of the frequency converter 66.

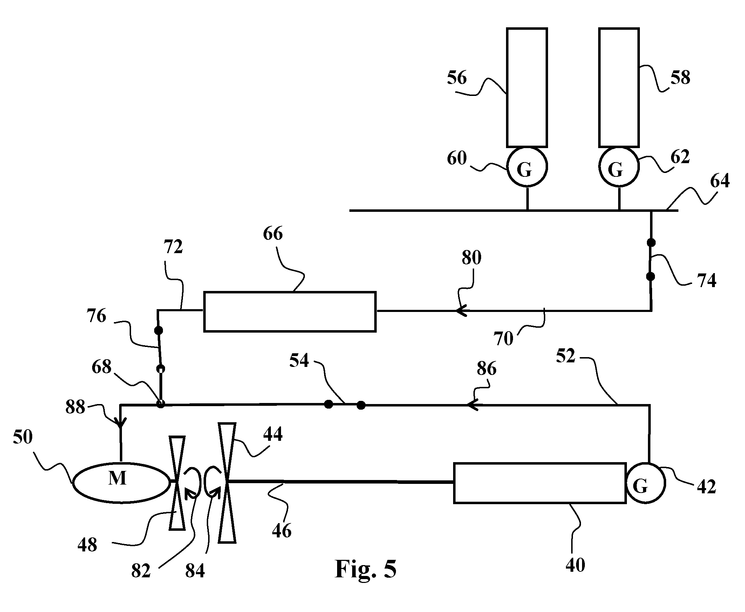

Figure 5 shows the second embodiment of the invention in a second start-up mode where the propulsion power is generated by the auxiliary rotating power units 56 and 58 and the main rotating power unit 40. The ac motor is supplied both from the ac generators 50 and 62 via the frequency converter 66 and from the ac generator 42 via the electrical power connection 52. The aft propeller 48 and the forward propeller 44 function in the CRP-mode as is illustrated by the arrows 82 and 84. The main rotating power unit is functioning and the ac generator 42 is generating electric power and the power circuit breaker 54 is switched on. The circuit breakers 74 and 76 are switched on and the electric power is supplied to ac motor 50 via the frequency converter 66 and via the main switchboard from the generators 60 and 62. The flow of electric power from the ac generators 60 and 62 is illustrated by the arrow 80, the flow of electric power from the ac generator 42 is illustrated by the arrow 86 and the flow of electric power to the ac motor 50 is illustrated by the arrow 88. The power and frequency supplying the electric energy to the ac motor 50 is controlled by the frequency converter 66. In this mode the power supply to the ac motor 50 is gradually moving from the ac generators 60 and 62 to the ac generator 42 by adjusting the output power of the ac generator 42 and controlling the frequency converter correspondingly. The main rotating power unit is working on a lowered power level, like 25 % of its nominal power and propulsion power of the forward propeller is about 25 % of its total power in order to keep the propulsion power levels of the aft and the forward propellers in the allowed limits. The propulsion power of the aft propeller is limited to the capacity of the ac generators 60 and 62, and in practice to the capacity of the frequency converter 66 and a proper CRP function requires that the propulsion powers of the forward and aft propellers is in the right proportion, preferably between 20:80 and 50:50.

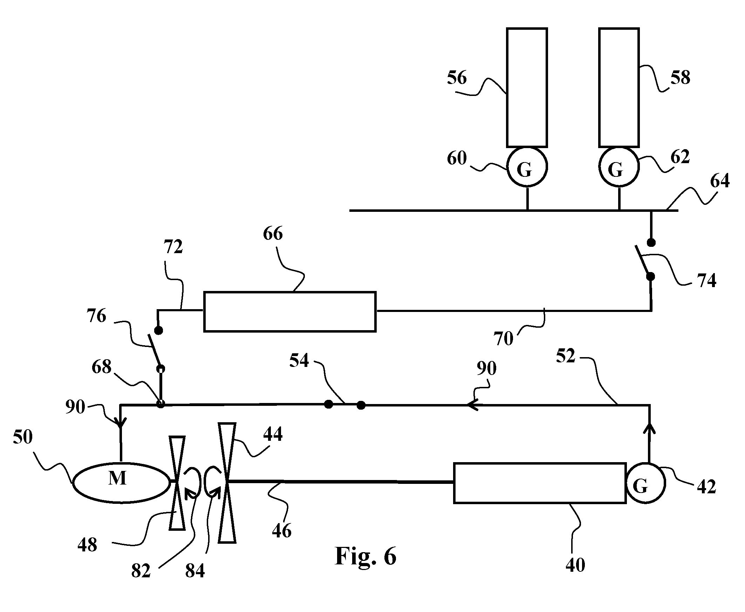

Figure 6 shows the second embodiment of the invention in a third start-up mode where the propulsion power is generated by the main rotating power unit 40. This also illustrates a full speed and full power propulsion where the both propellers are functioning by the power of the main rotating power unit 40 and the ac generator 42 is directly connected to the ac motor 50. The circuit breaker 54 is switched on, whereas the circuit breakers 74 and 76 are switched off, and ac motor 50 is totally supplied from the ac generator 42 via the electrical power connection 52. The aft propeller 48 and the forward propeller 44 function in the CRP-mode as is illustrated by the arrows 82 and 84. The flow of electric power to the ac motor 50 is illustrated by the arrows 90. During the third start-up mode the power of the main rotating power unit is increased from a lowered level, like 25 % towards its nominal power. In order to have an efficient CRP-function the propulsion powers of the forward and aft propellers are in the right proportion, preferably between 20:80 and 50:50. As the ac generator 42 is directly connected to the ac motor 50 via the electrical power connection 52, the ac generator 42 and the ac motor has the same frequency. When they both are synchronous machines, their rotational speeds differ from each other on the basis of the pole numbers of the machines. Correspondingly the rotational speeds of the aft and forward propellers differ on the same way as they are fastened to the shafts of the machines.

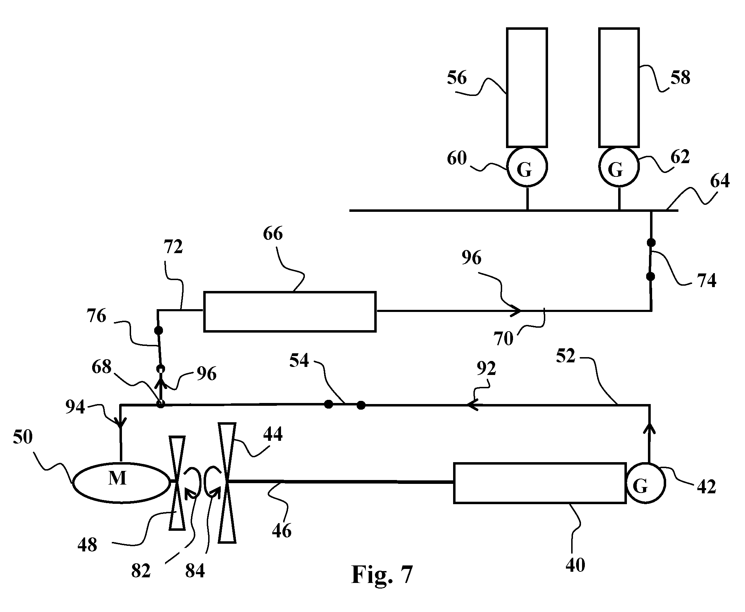

Figure 7 shows the second embodiment of the invention in a fourth mode where the propulsion power is generated by the main rotating power unit 40. The main rotating power unit 40 is functioning at full power and the ac generator 42 is directly connected to the ac motor 50. The circuit breaker 54 is switched on and also the circuit breakers 74 and 76 are switched on and the frequency converter 66 is connected between the main switchboard 64 and the junction 68 of the line 52. The ac motor 50 is totally supplied from the ac generator 42 via the electrical power connection 52. In addition the ac generator 42 is also supplying power to the main switchboard 64 as controlled by the frequency converter 66. The flow of electric power to the ac motor 50 is illustrated by the arrow 94, the flow of electric power from the ac generator 42 is illustrated by the arrows 92 and flow of electric power to the main switchboard 64 is illustrated by the arrows 96. The propulsion power is lowered by the amount that is supplied to the main switchboard 64. In other respects CRP functions as explained in connection of the figure 6.

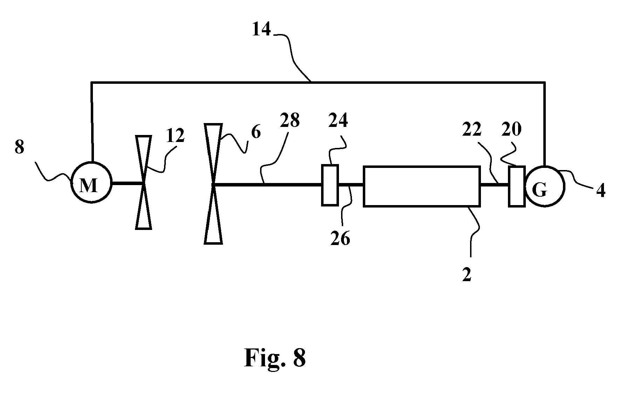

Figure 8 shows a schematic diagram of a third embodiment of the invention. A main rotating power unit 2 that is e.g. a two-stroke diesel engine drives a propulsion ac generator 4 via a gear 20, which is coupled to a first output shaft 22 of the rotating power unit 2. A second gear 24 is coupled to the second output shaft 26 of the rotating power unit 2. The propeller 6 is connected to the secondary shaft 28 of the gear 24. Opposite to the main propeller 6 is arranged a second propeller 12 which is driven by an ac motor 8. The main or the forward propeller 6 is fitted with a bearing to the hull of the vessel. The second or the aft propeller 12 is supported with the ac motor 8 to the hull of the vessel or to the rudder arrangement of the vessel. The forward propeller 6 and the aft propeller 12 are arranged to operate in a contra rotating propeller (CRP) mode that is well-known to the men skilled in the art. The ac generator 4 is connected to the ac motor 8 by an electrical power connection 14. The ac motor 8 and the ac generator 4 have the same frequency. The pole numbers of the ac generator 4 and ac motor 8 is defined so the rotation speed of the second propeller 12 is between 95% and 150% of the rotation speed of the first propeller 6.

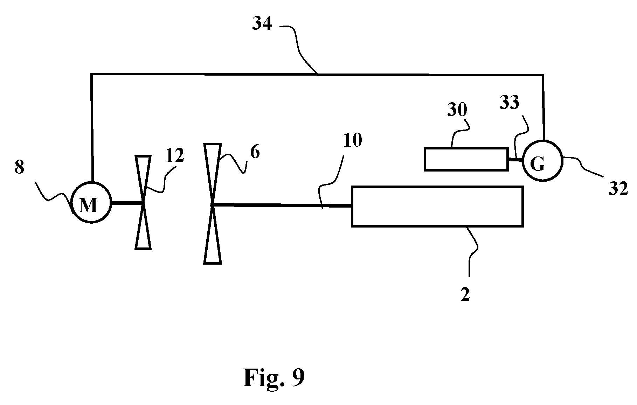

Figure 9 shows a schematic diagram of a fourth embodiment of the invention. A main rotating power unit 2 that is e.g. a two-stroke diesel engine drives a first propeller 6 connected to its output shaft 10. Another rotating power unit 30 rotates the ac generator 32 which is coupled to the output shaft 33 of the rotating power unit 30. The rotating power unit 30 may separate from the main rotating power unit 2 or it may be a turbocharger utilizing the exhaust gases of the main rotating power unit. Opposite to the main propeller 6 is arranged a second propeller 12 which is driven by an ac motor 8. The main or the forward propeller 6 is fitted with a bearing to the hull of the vessel. The second or the aft propeller 12 is supported with the ac motor 8 to the hull of the vessel or to the rudder arrangement of the vessel. The forward propeller 6 and the aft propeller 12 are arranged to operate in a contra rotating propeller (CRP) mode that is well-known to the men skilled in the art. The ac generator 4 is connected to the ac motor 8 by an electrical power connection 34. The ac motor 8 and the ac generator 4 have the same frequency. The pole numbers of the ac generator 4 and ac motor 8 and the rotational speeds of the main rotating power unit 2 and the other rotating power unit 30 is defined so the rotation speed of the second propeller 12 is between 95% and 150% of the rotation speed of the first propeller 6.

The arrangement according to invention may have many embodiments. Some of them are hereby mentioned as examples. The AC motor and/or the AC generator have one or more independent windings which can utilized as known in the art. The AC motor and AC generator and the electrical power connections comprise three or more electrical phases.

The first propeller and second propeller are coaxially aligned in the CRP arrangement. The propellers may also be slightly offset so that they are not exactly on the same line or so that they are slightly inclined.

The AC generator may comprise one or more separate generators. If there are not available large enough generator it is possible to use two or several generators coupled parallel and rotated by the rotating power unit. The generators can be connected and disconnected depending on the power demand.

It is possible that the AC generator only is driven by the same rotating power source as the first propeller. It also is possible to divide the main rotating power unit to smaller units, whereby one of them rotates the first propeller and the other rotates the ac generator connected to the ac motor of the second propeller. The smaller rotating power units can be positioned more freely in the vessel and the space will be used more optimized. The smaller power unit can be a gas turbine, whereby it is possible to adjust the proportion of the rotational speeds of the propellers.

The second propeller may be fixed to the hull or to the rudder of the vessel. The second propeller may of a pod type propeller. It may also be of azimuth type, which may be used for steering the vessel.

Different kind of AC machines are possible both for the AC motor and for AC generator. The AC machine may be induction or synchronous machines. The synchronous machines may be excited by electrically controlled magnets or by permanent magnet.

When induction motor is used the slip of the induction type motor is changed, when the excitation of the synchronous type generator adjusted. By this way power relative to speed can be slightly adjusted. In the case that the generator is an induction type slip ring generator, where rotor circuit includes external controllable resistors or frequency converter enables to control the relative speed of the rotor and stator, it is possible to adjust further the slip of the generator. By this method the slip could be adjusted approximately ± 20%. This generator can then drive induction or synchronous motor with adjustable frequency. By both of these methods the load of the rotating power unit can be adjusted to be more optimal, for example, for the rotating power unit's fuel consumption.

Both first propeller and the second propeller may have fixed pitch or controllable pitch.

## Claims

1. Arrangement for supplying propulsion power to a contra rotating propellers (CRP) propulsion system in a marine vessel, which arrangement comprises a first propeller (6) driven by a rotating power unit (2) and a second propeller (12) driven by an AC motor (8), whereby the second propeller (12) is rotated in the opposite direction as the first propeller (6), wherein an AC generator (4) is driven by the rotating power unit (2) and the AC generator (4) is electrically connected to the AC motor (8), **characterized in that** the rotation speed of the second propeller (12) is between 95% and 150% of the rotation speed of the first propeller (6), that the AC motor (8) and the AC generator (4) have the same electrical frequency, and that the pole number of the AC generator (4) is from 2 to 40 and the pole number of the AC motor (8) is from 2 to 40 so that the ratio of the pole numbers of the AC motor (8) and the AC generator (4) is from 0.05 to 20.

2. Arrangement according to claim 1 **characterized in that** the diameter of the second propeller (12) is smaller than the diameter of first propeller (6).

3. Arrangement according to claim 1 **characterized in that** the distance between the first propeller (6) and the second propeller (12) is less than twice the diameter of the first propeller (6).

4. Arrangement according to claim 1 **characterized in that** the power proportion of the first propeller (6) and the second propeller (12) ranges between 50:50 and 80:20.

5. Arrangement according to claim 1 **characterized in that** the AC motor (50) is supplied by a second electrical power source (66), which is electrically connected parallel to the AC generator (42).

6. Arrangement according to claim 1 **characterized in that** the AC generator (42) supplies electric power to a second electrical consumer (64), which is electrically connected to the ac generator (42).

7. Arrangement according to claim 5 **characterized in that** the second power source comprises a frequency converter (66), and that the second power source is electrically connected via a switch (76) to the AC motor (50).

8. Arrangement according to claim 5 **characterized in that** the second power source is switchable to the AC motor (50) and/or the AC generator (42) when changing the power distribution between the first propeller (44) and the second propeller (48).

9. Arrangement according to claim 5 **characterized in that** an electrical power connection between the AC motor (50) and the AC generator (42) comprises a line breaker (54), and that the AC generator (42) and the second power source (66) are alternatively switchable to the AC motor (50) when maneuvering the vessel.

10. Arrangement according to claim 1 **characterized in that** the AC motor and/or the AC generator have one or more independent windings.

11. Arrangement according to claim 1 **characterized in that** the AC generator comprises one or more separate generators.

12. Arrangement according to claim 1 **characterized in that** there is one or more mechanical gears (24) between the first propeller (6) and the rotating power unit (2) driving the first propeller.

13. Arrangement according to claim 1 **characterized in that** there is one or more mechanical gears (20) between the AC generator (4) and the rotating power unit (2) driving the AC generator and/or a gear unit is arranged between the second propeller and the AC motor.

14. Arrangement according to claim 1 **characterized in that** the second propeller is of azimuth type.

## Patentansprüche

1. Anordnung zum Zuführen von Antriebsleistung zu einem CRP-Antriebssystem (CRP: gegenläufige Propeller) in einem Seeschiff, wobei die Anordnung einen ersten Propeller (6), der durch eine Drehleistungseinheit (2) angetrieben wird, und einen zweiten Propeller (12), der durch einen Wechselstrommotor (8) angetrieben wird, umfasst, wobei der zweite Propeller (12) in die entgegengesetzte Richtung als der erste Propeller (6) gedreht wird, wobei der Wechselstromgenerator (4) durch die Drehleistungseinheit (2) angetrieben wird und der Wechselstromgenerator (4) mit dem Wechselstrommotor (8) elektrisch verbunden ist, **dadurch gekennzeichnet, dass** die Drehzahl des zweiten Propellers (12) zwischen 95 % und 150 % der Drehzahl des ersten Propellers (6) beträgt, dass der Wechselstrommotor (8) und der Wechselstromgenerator (4) dieselbe elektrische Frequenz aufweisen, und dass die Polzahl des Wechselstromgenerators (4) von 2 bis 40 beträgt und die Polzahl des Wechselstrommotors (8) von 2 bis 40 beträgt, so dass das Verhältnis der Polzahlen des Wechselstrommotors (8) und des Wechselstromgenerators (4) von 0,05 bis 20 beträgt.

2. Anordnung nach Anspruch 1, **dadurch gekennzeichnet, dass** der Durchmesser des zweiten Propellers (12) kleiner ist als der Durchmesser des ersten Propellers (6).

3. Anordnung nach Anspruch 1, **dadurch gekennzeichnet, dass** der Abstand zwischen dem ersten Propeller (6) und dem zweiten Propeller (12) kleiner ist als der doppelte Durchmesser des ersten Propellers (6).

4. Anordnung nach Anspruch 1, **dadurch gekennzeichnet, dass** das Leistungsverhältnis des ersten Propellers (6) und des zweiten Propellers (12) in einem Bereich zwischen 50:50 und 80:20 liegt.

5. Anordnung nach Anspruch 1, **dadurch gekennzeichnet, dass** der Wechselstrommotor (50) durch eine zweite Quelle elektrischer Leistung (66) versorgt wird, die parallel zu dem Wechselstromgenerator (42) elektrisch verbunden ist.

6. Anordnung nach Anspruch 1, **dadurch gekennzeichnet, dass** der Wechselstromgenerator (42) elektrische Leistung an einen zweiten elektrischen Verbraucher (64) liefert, der mit dem Wechselstromgenerator (42) elektrisch verbunden ist.

7. Anordnung nach Anspruch 5, **dadurch gekennzeichnet, dass** die zweite Leistungsquelle einen Frequenzwandler (66) umfasst und dass die zweite Leistungsquelle über einen Schalter (76) mit dem Wechselstrommotor (50) elektrisch verbunden ist.

8. Anordnung nach Anspruch 5, **dadurch gekennzeichnet, dass** die zweite Leistungsquelle auf den Wechselstrommotor (50) und/oder den Wechselstromgenerator (42) umschaltbar ist, wenn die Leistungsverteilung zwischen dem ersten Propeller (44) und dem zweiten Propeller (48) geändert wird.

9. Anordnung nach Anspruch 5, **dadurch gekennzeichnet, dass** die elektrische Leistungsverbindung zwischen dem Wechselstrommotor (50) und dem Wechselstromgenerator (42) einen Leitungsunterbrecher (54) umfasst und dass der Wechselstromgenerator (42) und die zweite Leistungsquelle (66) beim Manövrieren des Schiffs wahlweise auf den Wechselstrommotor (50) umschaltbar sind.

10. Anordnung nach Anspruch 1, **dadurch gekennzeichnet, dass** der Wechselstrommotor und/oder der Wechselstromgenerator eine oder mehrere unabhängige Wicklungen aufweisen.

11. Anordnung nach Anspruch 1, **dadurch gekennzeichnet, dass** der Wechselstromgenerator einen oder mehrere separate Generatoren aufweist.

12. Anordnung nach Anspruch 1, **dadurch gekennzeichnet, dass** ein oder mehrere mechanische Getriebe (24) zwischen dem ersten Propeller (6) und der Drehleistungseinheit (2), die den ersten Propeller antreibt, vorhanden sind.

13. Anordnung nach Anspruch 1, **dadurch gekennzeichnet, dass** ein oder mehrere mechanische Getriebe (20) zwischen dem Wechselstromgenerator (4) und der Drehleistungseinheit (2), die den Wechselstromgenerator antreibt, vorhanden sind und/oder eine Getriebeeinheit zwischen dem zweiten Propeller und dem Wechselstrommotor angeordnet ist.

14. Anordnung nach Anspruch 1, **dadurch gekennzeichnet, dass** der zweite Propeller des Azimuttyps ist.

## Revendications

1. Arrangement destiné à fournir une puissance de propulsion à un système de propulsion à hélices contrarotatives (CRP) dans un navire, ledit arrangement comprenant une première hélice (6) entraînée par une unité de puissance rotative (2) et une deuxième hélice (12) entraînée par un moteur à courant alternatif (8), moyennant quoi la deuxième hélice (12) tourne dans la direction opposée par rapport à la première hélice (6), un générateur de courant alternatif (4) étant entraîné par l'unité de puissance rotative (2) et le générateur de courant alternatif (4) étant électriquement relié au moteur à courant alternatif (8), **caractérisé en ce que** la vitesse de rotation de la deuxième hélice (12) est comprise entre 95% et 150% de la vitesse de rotation de la première hélice (6), **en ce que** le moteur à courant alternatif (8) et le générateur de courant alternatif (4) présentent la même fréquence électrique, et **en ce que** le nombre de pôles du générateur de courant alternatif (4) est compris entre 2 et 40 et le nombre de pôles du moteur à courant alternatif (8) est compris entre 2 et 40, de sorte que le rapport entre le nombre de pôles du moteur à courant alternatif (8) et le nombre de pôles du générateur de courant alternatif (4) est compris entre 0,05 et 20.

2. Arrangement selon la revendication 1, **caractérisé en ce que** le diamètre de la deuxième hélice (12) est inférieur au diamètre de la première hélice (6).

3. Arrangement selon la revendication 1, **caractérisé en ce que** la distance entre la première hélice (6) et la deuxième hélice (12) est inférieure à deux fois le diamètre de la première hélice (6).

4. Arrangement selon la revendication 1, **caractérisé en ce que** le rapport de puissance de la première hélice (6) et de la deuxième hélice (12) varie entre 50:50 et 80:20.

5. Arrangement selon la revendication 1, **caractérisé en ce que** le moteur à courant alternatif (50) est alimenté par une deuxième source de courant électrique (66) électriquement reliée en parallèle au générateur de courant alternatif (42).

6. Arrangement selon la revendication 1, **caractérisé en ce que** le générateur de courant alternatif (42) fournir une puissance électrique à un deuxième consommateur électrique (64) électriquement relié au générateur de courant alternatif (42).

7. Arrangement selon la revendication 5, **caractérisé en ce que** la deuxième source de courant comprend un convertisseur de fréquence (66), et **en ce que** la deuxième source de courant est électriquement reliée au moteur à courant alternatif (50) par le biais d'un interrupteur (76).

8. Arrangement selon la revendication 5, **caractérisé en ce que** la deuxième source de courant peut être branché sur le moteur à courant alternatif (50) et/ou sur le générateur de courant alternatif (42) lors d'un changement de répartition de puissance entre la première hélice (44) et la deuxième hélice (48).

9. Arrangement selon la revendication 5, **caractérisé en ce que** la connexion électrique entre le moteur à courant alternatif (50) et le générateur de courant alternatif (42) comprend un disjoncteur (54), et **en ce que** le générateur de courant alternatif (42) et la deuxième source de courant (66) peuvent être branchées alternativement sur le moteur à courant alternatif (50) pendant la manoeuvre du navire.

10. Arrangement selon la revendication 1, **caractérisé en ce que** le moteur à courant alternatif et/ou le générateur de courant alternatif présentent un ou plusieurs enroulements indépendants.

11. Arrangement selon la revendication 1, **caractérisé en ce que** le générateur de courant alternatif comprend un ou plusieurs générateurs indépendants.

12. Arrangement selon la revendication 1, **caractérisé en ce qu'**il est prévu un ou plusieurs engrenages mécaniques (24) entre la première hélice (6) et l'unité de puissance rotative (2) entraînant la première hélice.

13. Arrangement selon la revendication 1, **caractérisé en ce qu'**il est prévu un ou plusieurs engrenages mécaniques (20) entre le générateur de courant alternatif (4) et l'unité de puissance (2) entraînant le générateur de courant alternatif et/ou **en ce qu'**un groupe d'engrenages est arrangé entre la deuxième hélice et le moteur à courant alternatif.

14. Arrangement selon la revendication 1, **caractérisé en ce que** la deuxième hélice est du type azimutal.
